# EUROPÄISCHE PATENTSCHRIFT

(11) **EP 3 426 728 B1**
(45) Veröffentlichungstag und Bekanntmachung des Hinweises auf die Patenterteilung: **22.04.2020**
(21) Anmeldenummer: 17712930.1
(22) Anmeldetag: 07.03.2017
(51) Int. Cl.: C08L 67/02, C08L 75/04, C08L 77/12

(54) **THERMOPLASTISCHE ZUSAMMENSETZUNG**
THERMOPLASTIC COMPOSITION
COMPOSITION THERMOPLASTIQUE

(30) Priorität: 10.03.2016 DE 102016104379
(43) Veröffentlichungstag der Anmeldung: 16.01.2019
(60) Teilanmeldung: 19192025.5
(73) Patentinhaber: FKuR Property GmbH, 47844 Willich (DE)
(72) Erfinder: KRPAN, Karel, 35135 Padova (IT); DOLFEN, Edmund, 47804 Krefeld (DE); NEUMANN, Frank-Martin, 79862 Höchenschwand (DE); MICHELS, Carmen, 47877 Willich (DE)
(74) Vertreter: Wittmann, Ernst-Ulrich
(86) Internationale Anmeldenummer: PCT/EP2017/055361
(87) Internationale Veröffentlichungsnummer: WO 2017/153431

(56) Entgegenhaltungen:
- WO-A1-99/40797
- US-A1- 2003 166 748
- US-A1- 2013 136 879

## Beschreibung

Die vorliegende Erfindung betrifft eine thermoplastische Zusammensetzung, wie sie insbesondere in der Extrusion und Compoundierung eingesetzt wird sowie ein Verfahren zum Herstellen von Folien, Filmen, Formkörpern, Schaumstoffen, Beschichtungen, Lacken und Dispersionen unter Einsatz der erfindungsgemäßen thermoplastischen Zusammensetzung sowie mittels des erfindungsgemäßen Verfahrens hergestellte Folien, Filme, Formkörper, Schaumstoffe, Beschichtungen, Lacke und Dispersionen.

Thermoplastische Zusammensetzungen, insbesondere solche bei denen biogene Polymere beteiligt sind, sind im Stand der Technik bekannt und werden insbesondere in der Extrusion und Compoundierung eingesetzt. Hierbei funktionieren Verfahren auf dem Stand der Technik zur Erzeugung von Polymerabmischungen zumeist nach dem Grundschema, dass ein polymeres Trägermaterial als Hauptbestandteil einer Rezeptur und ein oder mehrere weitere Polymere zusammen extrudiert werden. Dabei dosiert man sehr häufig Füllstoffe meist im oberen Bereich der Einzugszone des Extruders hinzu, um die spezifischen Eigenschaften des Produktes variieren und gleichzeitig die Rezepturkosten reduzieren zu können. Weitere Additive haben den Zweck, die Verträglichkeit zwischen den polymeren Edukten und den Füllstoffen zu verbessern. Schließlich sind Weichmacher in vielen Rezepturen sowohl für die Prozessführung als auch für das Produktergebnis unverzichtbar.

Für ein optimales Resultat ist eine stabile und robuste Prozessführung von entscheidender Bedeutung, dabei kommt dem prozentualen Anteil von Wasser im Compound eine entscheidende Bedeutung zu.

Wasser kann als Rezepturbestandteil bei Compoundier- und Extrusionsprozessen und insbesondere in der Funktion als Weichmacher eingesetzt werden. Der Einsatz von Wasser hat jedoch insbesondere die nachfolgend beschriebenen Nachteile.

Extrusionsprozesse finden in aller Regel weit oberhalb des Siedepunkts von Wasser statt, so dass bei unvollständiger Entgasung das wasserhaltige Compound unkontrollierbar aufschäumt. Gleichzeitig erfolgen die Extrusionsprozesse unter einem angelegten hohen Druck. Im Bereich der Austrittsdüse des Extruders fällt hierbei der Druck abrupt ab. Dies bedingt, dass es dort zu einer schlagartigen Expansion des Extrudatwassers kommt und damit ein vermehrtes Aufschäumen des Extrudats an der Austrittsdüse einsetzt mit behindernden Auswirkungen auf das Extrusionsergebnis und die weitere Prozessführung. Eine effiziente Entgasung beispielsweise durch Vakuumabsaugung kann diesem Effekt potentiell entgegenwirken, ist jedoch mit einem erheblichen technischen Aufwand verbunden.

Des Weiteren kann untertypischen Extrusionsbedingungen bei Zonentemperaturen von » 130°C, welche gewöhnlich für derartige Zusammensetzungen benötigt werden, Wasser bereits als Elektronendonor (Lewis-Base) fungieren, da Wasser freie Valenzen besitzt, die zur Ausbildung kovalenter Bindungen geeignet sind und damit nachteilige nucleophile Reaktionen auslösen. Der hydrolytische Abbau von Polyestern ist im Stand der Technik ein hinlänglich bekannter nachteiliger Effekt, wobei neben der eigentlichen Abbaureaktion gleichsam unerwünschte Nachpolymerisationen und Vernetzungsreaktionen stattfinden können. Bei typischen biogenen Polymeren wie den Polysacchariden, Hemicellulosen oder Polyhydroxyalkonaten, aber auch erdölbasierten biologisch abbaubaren Polymeren wie z.B. den Polyvinylderivaten führt dies zu Spaltungsreaktionen, Bildung kleiner Molekülfragmente und Umesterungen, so dass der Extrusionsprozess insgesamt unkontrollierbar werden kann. Zudem bildet Wasser in unerwünschter Weise mit vielen kleinen Molekülen unterschiedlicher Polarität in der Regel azeotrope Gemische, bei denen Dampf- und Flüssigkeitsphase gleich sind. Deren Zusammensetzung hat unkontrollierbare Auswirkungen auf die Compoundier- und Extrusionsprozesse. Zwar kann Wasser naturgemäß durch den Einsatz vernetzender Anhydride wie beispielhaft durch Maleinsäure, Bernsteinsäure, Phtalsäure, Caprolactam abgefangen werden. Dies führt jedoch unweigerlich zu potentiell nachteilig veränderten stofflichen Eigenschaften, weil die Anhydride zu Kettenverlängerern oder Vernetzern umfunktioniert werden.

Bei vielen biologisch abbaubaren und/oder kompostierbaren Kunststoffen ist ein signifikant hoher nachteiliger Wasseranteil jedoch häufig unvermeidbar. Bei diesen Kunststoffen wird beispielsweise häufig Stärke gerade auch in nativer Form als Strukturelement hinzugeführt, welche konventionelle nicht-biogene Strukturbildner ersetzt. Wasser ist zu etwa 12 - 20% ein Strukturbestandteil nativer, makromolekularer Stärke. Selbst bei modifizierten Stärkeformen werden meist immer noch Eigenwasserwerte > 5 % erreicht. Die Einarbeitung von Stärken in das Compound stellt aufgrund des relativ hohen Eigenwassergehalts der Stärken beim Compoundierprozess verfahrensbedingt ein Problem dar, es sei denn, dass die Evaporation durch Vakuumabsaugung unterbunden werden kann. Aber auch der häufig unvollständige Grad des Aufschlusses der spezifischen Stärken kann zu unkontrollierbaren Resultaten führen.

Des Weiteren kann Stärke unter Hitzeeinwirkung, wie sie beim Extrudieren auftritt, physikalisch ein Vielfaches ihres Eigengewichtes an Wasser binden, aufquellen und verkleistern. Beim Erhitzen mit Wasser quillt die Stärke durch Wassereinlagerung bei etwa 47 - 57 °C, und bei etwa 55 - 87 °C entsteht durch Stärkeaufschluss sogenannter Stärkekleister, welcher je nach der Stärkesorte verschiedenes Viskositätsvermögen aufweist. Dabei kann die bereits verkleisterte Stärke die Gashaltung im Extrudat unterstützen und zu festen Poren führen mit entsprechend unerwünschten Konsequenzen für die weitere Prozessführung.

Um bei stärkebeinhaltenden biologisch abbaubaren und/oder kompostierbaren Kunststoffen die Stärke während der Extrusion und Compoundierung gut verarbeiten zu können, muss ein Weichmacher eingesetzt werden. Es sind zahlreiche Weichmacher im Stand der Technik bekannt, die für Compoundier- und Extrusionsprozesse Verwendung finden. So sind im Stand der Technik folgende Patentschriften bekannt: WO 99/40797 A1, US 2013/136879 A1 und US 2003/166748 A1. Aufgabe der vorliegenden Erfindung ist es, die im Stand der Technik bekannten Aufgabe der vorliegenden Erfindung ist es, die im Stand der Technik bekannten Nachteile wenigstens teilweise zu überwinden. Die vorstehende Aufgabe wird durch eine erfindungsgemäße thermoplastische Zusammensetzung gemäß Anspruch 1 gelöst. Insbesondere werden erfindungsgemäß Füllstoffe und/oder Weichmacher nicht alleine zur Produktvariation und Kostenlenkung, sondern als Quencher zum Abfangen bzw. Inertisieren von Wasser während des Compoundier- und Extrusionsvorgangs eingesetzt. Bevorzugte Ausgestaltungsformen der thermoplastischen Zusammensetzung sind Gegenstand der Unteransprüche.

Die erfindungsgemäße thermoplastische Zusammensetzung zum Einsatz in der Extrusion und Compoundierung ist in Anspruch 1 gekennzeichnet und umfasst:
(a) eine kontinuierliche Phase, die wenigstens ein erstes Polymer aufweist, welches aus einer Gruppe ausgewählt wird, welche einen Polyester, ein Polyesteramid, ein Polyesteretheramid, ein aliphatisches oder teilaromatisches Polyesterurethan oder Abmischungen davon, insbesondere solche Verbindungen oder Abmischungen mit hydrophoben Oberflächeneigenschaften aufweist,
(b) wenigstens eine dispergierte Phase, die
   (i) als zweites Polymer wenigstens einen biogenen Vernetzer umfasst, welcher einen Wasseranteil von 0,1 bis 30 Gew. %, insbesondere von 5 bis 25 Gew. % in Bezug auf dessen Gesamtgewicht aufweist und worin das erste Polymer der kontinuierlichen Phase nicht mit dem zweiten Polymer derdispergierten Phase mischbar ist, und
   (ii) wenigstens einen anorganischen Füllstoff und
   (iii) wenigstens einen Weichmacher aufweist.

Die erfindungsgemäße thermoplastische Zusammensetzung ist dadurch gekennzeichnet, dass der Weichmacher Diglycerin oder Abmischungen mit Diglycerin aufweist und der Füllstoff einen Anteil von 0,1 bis 40 Gew. % in Bezug auf das Gesamtgewicht der Zusammensetzung hat.

Weiter ist die erfindungsgemäße Zusammensetzung dadurch gekennzeichnet, dass der Weichmacher ein Enantiomerenverhältnis von (a) α,α'-Diglycerin von 50 bis 70 Gew.-%, und (b) α,β-Diglycerin von 25 bis 40 Gew.-%, und (c) β,β'-Diglycerin von 2 bis 10 Gew.-% in Bezug auf die Summe des α,α', α,β, und β,β'-Diglycerins aufweist.

Im Sinne der vorliegenden Erfindung soll unter "hydrophob" die Neigung verstanden werden, Wasser nicht zu binden bzw. nicht temporär physikalisch anzulagern und/oder in hydratisierter Form nicht noch weitere Wassermoleküle anzulagern. Dabei können insbesondere die Oberflächen des ersten Polymers durch hydrophobe Beschichtungen, Grundierungen oder Versiegelungen modifiziert sein.
Gemäß einer bevorzugten Ausführungsform der erfindungsgemäßen Zusammensetzung weist die thermoplastische Zusammensetzung den Weichmacher Diglycerin in einem Enantiomerenverhältnis von
(a) α,α'- Diglycerin von etwa 65 Gew. %,
(b) α,β - Diglycerin von etwa 30 Gew. % und
(c) β,β'- Diglycerin von etwa 5 Gew. % in Bezug auf die Summe des α,α'-, α,β -, und β,β'- Diglycerins auf.

Es hat sich überraschenderweise gezeigt, dass der Einsatz derartig modifizierter Enantiomerenverhältnisse des Diglycerins in einer thermoplastischen Zusammensetzung die geschilderten Stand der Technik Probleme bei Coumpoundier- und Extrusionsprozessen zumindest teilweise überwinden kann und insbesondere die beschriebenen unkontrollierbaren, durch gasförmiges Wasser im Compound verursachten nucleophilen Reaktionsmechanismen unterdrückt werden. Des Weiteren wird der azeotrope Effekt nach Abmischung von wasserhaltigem Compound mit zugesetztem Glycerin unterdrückt, so dass Glycerin in Kombination mit derartig modifizierten Enantiomerenverhältnissen des Diglycerins erfindungsgemäß eingesetzt werden kann. Es hat sich beispielsweise überraschenderweise gezeigt, dass bei einer derartig modifizierten Zusammensetzung Glycerin selbst zu einem Anteil bis zu 60 % als Weichmacherkomponente in die thermoplastische Zusammensetzung hinzudosiert werden kann, ohne dass eine nennenswerte Evaporation des Extrudatwassers mit den beschriebenen nachteiligen Effekten stattfindet und dies in der bisherigen Praxis bis hin zu Extruder-Zonentemperaturen von etwa 190 °C. Der Einsatz derartiger Enantiomerenverhältnisse des Diglycerins ermöglicht weiterhin dem Compound sogenannte Polyglycerine zuzusetzen, wobei es sich nicht um definierte Verbindungen, sondern um auf der Basis des Glycerinmonomers erzeugte Oligomere mit statistischen Kettenlängenverteilungen handelt. Dabei können Polyglycerine ab dem Trimer wie beispielsweise das Glycerin-Trimer, -Tetramer, - Pentamer, -Hexamer, -Heptamer, -Oktamer, -Enneamer, -Dekamer oder Vielfachen hiervon erfindungsgemäß eingesetzt werden. Diese sind ohne den Einsatz des erfindungsgemäßen Enantiomerenverhältnisses des Diglycerins aufgrund ihrer hohen Viskosität nur schwierig in den Compoundierprozess einzubringen. Dies da es sich um Flüssigkeiten mit sehr hohen Viskositäten handelt, welche eine präzise Dosierung nahezu unmöglich machen und welche auch bei temperaturbedigtem Viskositätsabfall eine solide Durchmischung im Compound längs des Schneckengangs des Extruders verhindern.

Gemäß einer weiteren bevorzugten Ausführungsform der erfindungsgemäßen thermoplastischen Zusammensetzung weist der Weichmachereine Abmischung von
(a) Diglycerin und Triglycerin oder
(b) Diglycerin und Glycerin oder
(c) Diglycerin, Triglycerin und Glycerin auf,
wobei die Abmischung unter (a), (b) und (c) das Diglycerin in dieser Zusammenstellung wenigstens zwischen 25 und 75 Gew. % in Bezug auf die Summe
(a) des Diglycerins und des Triglycerins, (b) des Diglycerins und des Glycerins oder (c) des Diglycerins, des Glycerins und des Triglycerins umfasst.

Gemäß einer weiteren bevorzugten Ausführungsform der erfindungsgemäßen thermoplastischen Zusammensetzung weist der anorganische Füllstoff hydrophile Eigenschaften auf.

Im Sinne der vorliegenden Erfindung soll unter "hydrophil" die Neigung verstanden werden Wasserzu binden bzw. temporär physikalisch anzulagern und/oder in hydratisierter Form noch weitere Wassermoleküle anzulagern.

Die erfindungsgemäßen hydrophilen anorganischen Füllstoffe fungieren daher vorteilhaft als Abfänger (Quencher) des Wassers der thermoplastischen Zusammensetzung und wirken damit den unkontrollierbaren, durch gasförmiges Wasser verursachten nucleophilen Reaktionsmechanismen bei Compoundier- und Extrusionsprozessen, insbesondere beim Extrudieren im Bereich der Austrittsdüse des Extruders entgegen.

Bei den erfindungsgemäßen anorganischen Füllstoffen können insbesondere die Oberflächen aber auch innere Bestandteile hydrophile Eigenschaften aufweisen. Insbesondere die Oberflächen der anorganischen Füllstoffe können durch hydrophile Beschichtungen, Grundierungen oderVersiegelungen modifiziert sein.

Gemäß einer weiteren bevorzugten Ausführungsform der erfindungsgemäßen thermoplastischen Zusammensetzung umfasst der anorganische Füllstoff Mineralstoffe, ausgewählt aus einer Gruppe bestehend aus Erdalkalimetallen und deren Salzen, Bentonit, Carbonaten, Kieselsäuren, Kieselgel, Salzen von Erdalkalimetallen mit Kieselsäure und Silicaten, insbesondere Kreiden, Dolomite und/oderTalkum.

Gemäß einer weiteren besonders bevorzugten Ausführungsform der erfindungsgemäßen thermoplastischen Zusammensetzung umfasst der anorganische Füllstoff Kreiden, Dolomite und/oderTalkum.

Gemäß einer weiteren bevorzugten Ausführungsform der erfindungsgemäßen thermoplastischen Zusammensetzung umfasst der anorganischen Füllstoff Salze eines Erdalkalimetalls, vorzugsweise Sulfate und/oder Phosphate des Calciums und/oder Magnesiums.

Der Einsatz dieser zuletzt genannten Füllstoffe hat noch einen weiteren Vorteil, der darin besteht, dass sich mit ihnen vergleichbare Elastizitätswerte wie mit Talkum erzeugen lassen. Dieser Umstand ist besonders interessant, weil das karzinogene Potential des Talkums mit Asbest als vergleichbar eingestuft wird.

Dadurch wird gegenüber einer Zusammensetzung ohne derartige anorganische Füllstoffe eine höhere Bruchdehnung und Weiterreißarbeit des Werkstoffs, insbesondere bei Verwendung von Sulfatsalzen eines Erdalkalimetalls erzielt. Des Weiteren hat sich überraschenderweise gezeigt, dass insbesondere Sulfatsalze eines Erdalkalimetalls, alleine und besonders in Kombination mit Diglycerinen in erfindungsgemäßen Enantiomerenverhältnissen geeignet sind, den Compoundierprozess zu verbessern und auch bei der Extrusion die Probleme der Blasenbildung und des Aufschäumens an der Austrittsdüse des Extruders vermindern oder verhindern können.

Gemäß einer weiteren bevorzugten Ausführungsform der vorliegenden Erfindung sind die Salze der Erdalkalimetalle Calciumsulfate, vorzugsweise Gips, wie beispielsweise Naturgips, Naturanhydrit, Rauchgasgips oder Abmischungen daraus.

Insbesondere Gips in Kombination mit Diglycerinen in erfindungsgemäßen Enantiomerenverhältnissen ist besonders vorteilhaft zur Verbesserung der Compoundier- und Extrusionsprozesse.

Gemäß einer weiteren bevorzugten Ausführungsform der erfindungsgemäßen thermoplastischen Zusammensetzung sind die Salze der Erdalkalimetalle Phosphate, vorzugsweise Apatit, Phosporit und Hydroxylapatit bzw. Salze und Kondensate der ortho - Phosphorsäure wie Salze der Pyrophosphate, Polyphosphate und hier speziell Calciumpolyphosphat, Kaliumpolyphosphat, Magnesiumphosphat, Natriumpolyphosphat, Natriumcalciumpolyphosphat, Natriummagnesiumpolyphosphat und Cyclophosphate der Alkali- und Erdalkalimetalle Kalium, Natrium, Magnesium und Calcium.

Eine weitere bevorzugte Ausführungsform der erfindungsgemäßen thermoplastischen Zusammensetzung, wobei das erste Polymer der kontinuierlichen Phase
(a) biogene oder teilbiogene Komponenten aufweist und/oder ausgewählt ist aus einer Gruppe von Polyhydroxysäuren, Polyhydroxyalkanoaten, Polylactiden und Ligninen sowie deren Derivaten und/oder Copolymeren und insbesondere ausgewählt ist aus einer Gruppe bestehend aus Polybutylen-Adipat-Terephthalat (PBAT), Polybutylensebacinat-Terephthalat (PBST), Polybutylensuccinat (PBS), Polybutylensuccinat-Adipat (PBSA), und/oder
(b) synthetische Komponenten aufweist und ausgewählt ist aus einer Gruppe von aliphatischen und aromatischen Polyestern sowie aliphatisch-aromatischen CoPolyestern, beispielsweise Polybutylen-Adipat-Terephthalat (PBAT).

Gemäß einer besonders bevorzugten Ausführungsform der erfindungsgemäßen thermoplastischen Zusammensetzung ist die biogene oderteilbiogene Komponenten bzw. die synthetische Komponente Polybutylen-Adipat-Terephthalat (PBAT) oder weist Polybutylen-Adipat-Terephthalat (PBAT) auf.

Gemäß einer weiteren besonders bevorzugten Ausführungsform der erfindungsgemäßen thermoplastischen Zusammensetzung ist die biogene Komponente (a) Polybutylensebacinat-Co-Terephthalat (PBST) oder weist Polybutylensebacinat-Co-Terephthalat (PBST) auf.

Gemäß einer weiteren besonders bevorzugten Ausführungsform der erfindungsgemäßen thermoplastischen Zusammensetzung ist die biogene Komponente (a) Polybutylensuccinat (PBS) oder weist Polybutylensuccinat (PBS) auf.

Gemäß einer weiteren besonders bevorzugten Ausführungsform der erfindungsgemäßen thermoplastischen Zusammensetzung ist die biogene Komponente (a) Polybutylensuccinat-Adipat (PBSA) oder weist Polybutylensuccinat-Adipat (PBSA) auf.

Gemäß einer weiteren bevorzugten Ausführungsform der erfindungsgemäßen thermoplastischen Zusammensetzung umfasst die Zusammensetzung als eine weitere dispergierte Phase wenigstens ein amorphes oder teilkristallines und insbesondere biogenes Polymer.

Unter "teilkristallin" im Sinne der vorliegenden Erfindung wird ein Feststoff verstanden, welcher sowohl kristalline als auch amorphe Bereiche (Domänen) aufweist.

Gemäß einer weiteren bevorzugten Ausführungsform der erfindungsgemäßen thermoplastischen Zusammensetzung ist das amorphe oder teilkristalline und insbesondere biogene Polymer ein Polymer oder Copolymer von Polymilchsäure (PLA) oder ein Polymer oder Copolymervon Polyhydroxyalkanoaten (PHA) und hier besonders von Polyhydroxybutyrat (PHB), Polyhydroxyvalerat (PHV), Polyhydroxy-butyrat-valerat (PHBV), Polyhydroxy-butyrathexanoat (PHBH), Polyhydroxyhexanoat (PHH), Polyhydroxyoctanoat (PHO) oder einer Abmischung aus wenigstens zwei der vorgenannten.

Gemäß einer weiteren bevorzugten Ausführungsform der erfindungsgemäßen thermoplastischen Zusammensetzung umfasst der biogene Vernetzer der dispergierten Phase polysaccharidische Strukturelemente, die aus einer Gruppe stammen, welche Stärken, die jeweils insbesondere eine spezifische Zusammensetzung aus Amylose und Amylopektin beinhalten, wie beispielsweise aus Kartoffel, Mais, Buchweizen, Weizen, Roggen, Hafer, Gerste, Reis, Erbsen und Tapioka, aufweisen.

Unter "Stärke" werden hier alle Arten von Stärke, d.h. Mehl, natürliche Stärke, chemisch und / oder physikalisch modifizierte Stärke, hydrolysierte Stärke, destrukturierte Stärke, gelatinisierte Stärke, plastifizierte Stärke, thermoplastische Stärke und Abmischungen daraus verstanden.

Stärken, die vollständig destruktiert sind oder geeignet sind, sich leicht weitgehend destruktieren zu lassen, haben sich als besonders vorteilhaft erwiesen.

In vorteilhafter Weise umfasst der biogene Vernetzer der dispergierten Phase der vorliegenden Erfindung mehr als ein polysaccharidisches Strukturelement. Gemische enthaltend Stärke und wenigstens ein zusätzliches polysaccharidisches Strukturelement als biogene Vernetzer der dispergierten Phase sind besonders bevorzugt.

In einer bevorzugten Ausführungsform der erfindungsgemäßen thermoplastischen Zusammensetzung weist der biogene Vernetzer der dispergierten Phase neben Stärke wenigstens ein zusätzliches polysaccharidisches Strukturelement auf, insbesondere ausgewählt aus der Gruppe bestehend aus Cellulose, Hemicellulose und/oder deren Derivaten, insbesondere Acetat-, Ester- und Ether-Derivaten.

Gemäß einer weiteren bevorzugten Ausführungsform der erfindungsgemäßen thermoplastischen Zusammensetzung ist das Verhältnis der polysaccharidischen Strukturelemente der dispergierten Phase zu dem wenigstens einen ersten Polymer der kontinuierlichen Phase 10 zu 90 Gew. % bis zu 90 zu 10 Gew. %, vorzugsweise in einem Verhältnis von 30 zu 70 Gew. % bis zu 70 zu 30 Gew. % und stärker bevorzugt in einem Verhältnis von 60 zu 40 Gew. % bis zu 40 zu 60 Gew. % ist, in Bezug auf die Summe der polysaccharidischen Strukturelemente der dispergierten Phase zu dem wenigstens einen ersten Polymer der kontinuierlichen Phase.

Gemäß einer weiteren bevorzugten Ausführungsform der erfindungsgemäßen thermoplastischen Zusammensetzung ist die Zusammensetzung biologisch abbaubar und/oder kompostierbar.

Gemäß einer weiteren bevorzugten Ausführungsform der erfindungsgemäßen thermoplastischen Zusammensetzung weist die Zusammensetzung zusätzlich weitere Additive, ausgewählt aus der Gruppe bestehend aus Dispergiermittel, Gleitmittel, vorWasserschützenden Mitteln, Vernetzungsmittel, Phasenvermittler, Formentnahmehilfsmittel, Mischungsverbesserern, UV-Stabilisatoren und Katalysatoren sowie Antioxidantien auf.

Kettenverlängerer wie Mono-, Di- und Polyepoxide, Polyepoxid-Acrylate und deren Copolymeren mit Styrol, aliphatische, aromatische oder aliphatisch-aromatische Carbodiimid-Oligomere und Polymere, Isocyanate, Isocyanurate und Kombinationen davon, Anhydride und Polyanhydride, welche die Kompatibilität zwischen dem polysaccharidischen Strukturelement bzw. den polysaccharidischen Strukturelementen und den anderen Polymeren der Zusammensetzung verbessern, können ebenfalls zugegeben werden.

Des Weiteren liegt es im Sinne der vorliegenden Erfindung, die verschiedenen beschriebenen erfindungsgemäßen Zusammensetzungen jeweils als Vormischungen ("Masterbatches") in Stand-der-Technik-Verfahren einzusetzen.

Gegenstand der vorliegenden Erfindung ist weiterhin ein Verfahren zum Herstellen von Folien, Filmen, Formkörpern, Schaumstoffen, Beschichtungen, Lacken und Dispersionen unter Einsatz der erfindungsgemäßen thermoplastischen Zusammensetzung.

Die mittels des erfindungsgemäßen Verfahrens hergestellten Folien, Filme, Formkörper, Schaumstoffe, Beschichtungen, Lacke und Dispersionen sind ebenfalls Gegenstand der vorliegenden Erfindung.

Formkörper im Sinne der Erfindung wie bspw. Platten, Tafeln, Profile und Hohlkörper, insbesondere Flaschen und Gebinde sind im Stand der Technik bekannt.

Gemäß einer bevorzugten Ausführungsform weisen die erfindungsgemäßen Folien, Filme und Formkörper eine Wanddicke von zwischen 5 µm und 1000 µm bzw. eine Wandstärke von zwischen 10 µm und 2000 µm auf.

Die vorliegende Erfindung umfasst ferner auch die Verwendung der erfindungsgemäßen thermoplastischen Zusammensetzung insbesondere in der Extrusion und der Compoundierung zur Herstellung von Folien, Filmen, Formkörpern, Schaumstoffen, Beschichtungen, Lacken und Dispersionen. Im Sinne der Erfindung kann auch die Verwendung der thermoplastischen Zusammensetzung beim Spritzgießen, Spritzen, Kalandrieren, Rotationsformen, Tauchen, Streichen, Beschichten und Gießen sein.

Die Erfindung wird nachfolgend anhand bevorzugter Ausführungsbeispiele erläutert, wobei darauf hingewiesen wird, dass durch diese Beispiele Abwandlungen bzw. Ergänzungen wie sie sich für den Fachmann unmittelbar ergeben mit umfasst sind. Darüber hinaus stellen diese Ausführungsbeispiele keine Beschränkung der Erfindung in der Art dar, dass Abwandlungen und Ergänzungen im Umfang der vorliegenden Erfindung liegen.

Dabei zeigen:
**Fig. 1** den Einfluss der Zugabe von Calciumsulfat-Verbindungen, nämlich Gips-Anhydrid (Ca[SO₄]) (B), Gips-Hemihydrat (Ca[SO₄] × ½ H₂O) (C) und Gips-Dihydrat (Ca[SO₄] × 2 H₂O) (D) im Vergleich zur Zugabe von Kreide (Ca[CO₃], Standard) (A) auf die Bruchdehnung der erfindungsgemäßen Zusammensetzung.
**Fig. 2** den Einfluss der Zugabe von Calciumsulfat-Verbindungen, nämlich Gips-Anhydrid (Ca[SO₄]) (B), Gips-Hemihydrat (Ca[SO₄] × ½ H₂O) (C) und Gips-Dihydrat (Ca[SO₄] x 2 H₂O) (D) im Vergleich zur Zugabe von Kreide (Ca[CO₃], Standard) (A) auf die Weiterreißarbeit der erfindungsgemäßen Zusammensetzung.
**Fig. 3** den Einfluss der Zugabe von Calciumsulfat-Verbindungen, nämlich Gips-Anhydrid (Ca[SO₄]) (B), Gips-Hemihydrat (Ca[SO₄] × ½ H₂O) (C) und Gips-Dihydrat (Ca[SO₄] × 2 H₂O) (D) im Vergleich zur Zugabe von Kreide (Ca[CO₃], Standard) (A) auf die Bruchspannung der erfindungsgemäßen Zusammensetzung.
**Fig. 4** den Einfluss der Zugabe von tertiärem Calciumphosphat (Ca₃[PO₄]₂) (B) im Vergleich zur Zugabe von Talkum (Mg₃[Si₄O₁₀(OH)₂], Standard) (A) auf die Bruchdehnung (längs und quer) der erfindungsgemäßen Zusammensetzung.
**Fig. 5** den Einfluss der Zugabe von tertiärem Calciumphosphat (Ca₃[PO₄]₂) (B) im Vergleich zur Zugabe von Talkum (Mg₃[Si₄O₁₀(OH)₂], Standard) (A) auf die Zugfestigkeit (längs und quer) der erfindungsgemäßen Zusammensetzung.
**Fig. 6** den Einfluss der Zugabe von tertiärem Calciumphosphat (Ca₃[PO₄]₂) (B) im Vergleich zur Zugabe von Talkum (Mg₃[Si₄O₁₀(OH)₂], Standard) (A) auf die Weiterreißarbeit (längs und quer) der erfindungsgemäßen Zusammensetzung.
**Fig. 7** den Einfluss der Zugabe von verschiedenen Anteilen Talkum (Mg₃[Si₄O₁₀(OH)₂]), nämlich 6% (A), 12% (B) und 18% (C) auf den Abbau der erfindungsgemäßen Zusammensetzung.
**Fig. 8** den Einfluss der Zugabe von verschiedenen Anteilen tertiärem Calciumphosphat (Ca₃[PO₄]₂ im Vergleich zur Zugabe von 12% Talkum (Mg₃[Si₄O₁₀(OH)₂], Standard) (B) auf den Abbau der erfindungsgemäßen Zusammensetzung.
**Fig. 9** den Einfluss der Zugabe von 6% sekundärem Magnesiumphosphat (MgHPO₄ x 3H₂O) zu 6% tertiärem Calciumphosphat (Ca₃[PO₄]₂) bzw. 12% sekundärem Magnesiumphosphat (MgHPO₄ x 3H₂O) im Vergleich zur Zugabe von 12% Talkum (Mg₃[Si₄O₁₀(OH)₂], Standard) (B) auf den Abbau der erfindungsgemäßen Zusammensetzung.

### Ausführungsbeispiele:

### Rezepturen und Prozessparameter mit Diglycerin

### Variante 1

| | | |
|---|---|---|
| PBAT | Extruder | TSA EMP 26-40 |
| Polylactid | D/L | 26mm/40 D |
| Stärke | Schneckendrehzahl | 200 [U/min] |
| Diglycerin | Druck vor der Düse | 14-15 [bar] |
| Kreide | | |
| Talkum | | |
| Additive | | |

wobei PBAT in Anteilen zwischen 30% und 70%, Polylactid (dispergierte Phase) in Anteilen zwischen 1% und 25%, Stärke in Anteilen zwischen 1% und 25%, Kreide (Füllstoff) in Anteilen zwischen 1% und 25%, Talkum (Füllstoff) in Anteilen zwischen 1% und 25% und Additive in Anteilen zwischen 0,1% und 5%, Diglycerin zwischen 1% und 6% bezogen auf das Gesamtgewicht der Rezeptur eingesetzt werden kann.

| Zone | 1 | 2 | 3 | 4 | 5 | 6 | 7 | 8 Düse |
|---|---|---|---|---|---|---|---|---|
| Soll | 140 | 150 | 155 | 160 | 170 | 175 | 170 | 160 |
| Ist | 140 | 150 | 156 | 163 | 170 | 177 | 171 | 165 |

### Variante 2

PBAT
Polylactid
Stärke
Diglycerin
Glycerin
Talkum
Additive
wobei PBAT in Anteilen zwischen 30% und 70%, Polylactid (dispergierte Phase) in Anteilen zwischen 1% und 25%, Stärke in Anteilen zwischen 1% und 25%, Talkum (Füllstoff) in Anteilen zwischen 1% und 25% und Additive in Anteilen zwischen 0,1% und 5% ein, Diglycerin und Glycerin zwischen 1% und 6% bezogen auf das Gesamtgewicht der Rezeptur eingesetzt werden können.

| Zone | 1 | 2 | 3 | 4 | 5 | 6 | 7 | 8 Düse |
|---|---|---|---|---|---|---|---|---|
| Soll | 140 | 150 | 155 | 160 | 170 | 175 | 170 | 160 |
| Ist | 140 | 150 | 155 | 165 | 170 | 175 | 171 | 162 |

### Variante 3

| | | |
|---|---|---|
| PBST | Extruder | Leistritz ZSE 40 |
| Polylactid | D/L | 26mm/40 D |
| Diglycerin | Schneckendrehzahl | 180 [U/min] |
| Glycerin | | |
| Kreide | Druck vor Düse | 11-12 [bar] |
| Talkum | | |
| Additive | | |

wobei PBST in Anteilen zwischen 30% und 70%, Polylactid (dispergierte Phase) in Anteilen zwischen 1% und 25%, Kreide in Anteilen zwischen 1% und 25%, Talkum (Füllstoff) in Anteilen zwischen 1% und 25% und Additive in Anteilen zwischen 0,1% und 5%, Diglycerin und Glycerin zwischen 1% und 6% bezogen auf das Gesamtgewicht der Rezeptur eingesetzt werden können.

| Zone | 1 | 2 | 3 | 4 | 5 | 6 | 7 | 8 | Flansch 1 | Flansch 2 | Düse |
|---|---|---|---|---|---|---|---|---|---|---|---|
| Soll | 135 | 135 | 140 | 155 | 155 | 155 | 155 | 160 | 160 | 160 | 165 |
| Ist | 135 | 135 | 135 | 155 | 155 | 155 | 155 | 155 | 160 | 160 | 165 |

Bei einer nicht erfindungsgemäßen Standardrezeptur, bestehend aus einem Matrixpolymer und einem weiteren vorzugsweise biogenen Polymerwerden die klassischen anorganischen Füllstoffe durch Calciumsulfate, vorzugsweise Gips ersetzt. Im vorliegenden nicht erfindungsgemäßen Beispiel handelt es sich um die Calciumsulfat-Verbindungen Gips-Anhydrid (Ca[SO₄]), Gips-Hemihydrat (Ca[SO₄] × ½ H₂O) und Gips-Dihydrat (Ca[SO₄] × 2 H₂O), wobei PBAT (kontinuierliche Phase) in Anteilen zwischen 50% und 70%, Polylactid (dispergierte Phase) in Anteilen zwischen 1% und 25%, Calciumsulfate (Füllstoff) in Anteilen zwischen 1% und 35%, Talkum (Füllstoff) in Anteilen zwischen 1% und 25% und Additive in Anteilen zwischen 0,1% und 5% eingesetzt werden können.

| **A** | **B** | **C** | **D** |
|---|---|---|---|
| PBAT | PBAT | PBAT | PBAT |
| PLA | PLA | PLA | PLA |
| Ca[CO₃] (Kreide) | Ca [SO₄] (Gips-Anhydrid) | Ca[SO₄] × ½ H₂O (Gips-Hemihydrat) | Ca[SO₄] × 2 H₂O (Gips-Dihydrat) |
| Talkum | Talkum | Talkum | Talkum |
| Additiv | Additiv | Additiv | Additiv |

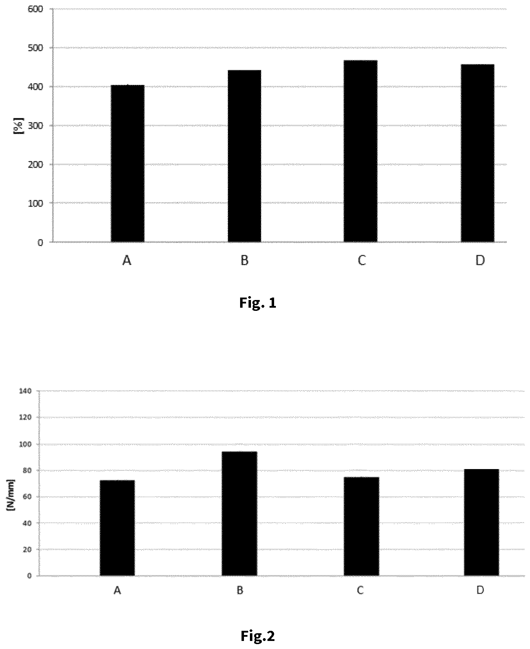

Dabei hat sich überraschend gezeigt, dass die Sulfate des Calciums einen positiven Effekt auf die Werte der Bruchdehnung und Weiterreißarbeit haben. So lassen sich bei Einsatz von Calciumsulfat sowohl Bruchdehnung als auch Weiterreißarbeit transversal um über 10% verbessern (Fig. 1 und Fig. 2).

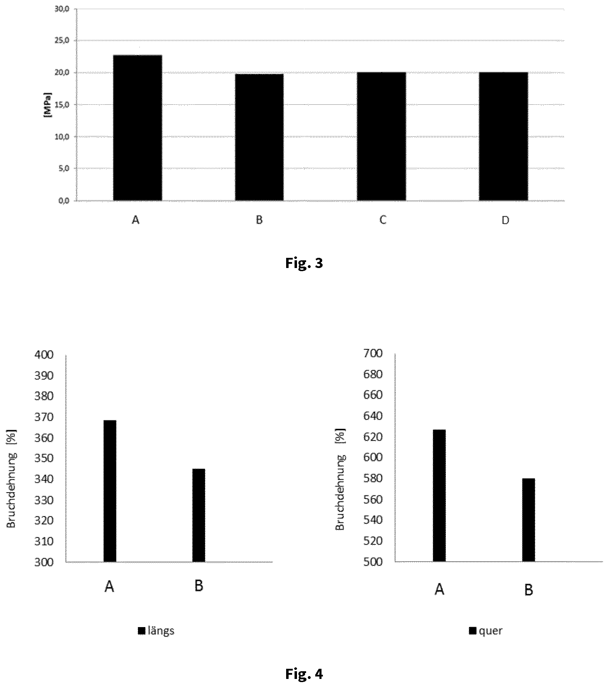

Mit der Rezeptur können nicht alle Parameter gleichzeitig verbessert werden. So verringert sich beim Einsatz von Sulfaten im Compound die der Bruchdehnung komplementäre Bruchspannung. Jedoch sind die Abweichungen mit ca. 10% relativ gering (Fig. 3) und damit weitgehend akzeptabel.

Gerade die positiven Effekte der Zusammensetzung auf die Dehnungskenngrößen sind dabei für die klassischen praktischen Anwendungsfelder wie Tragetaschen, Beutel oder Folien sehr attraktiv.

### Variante 4 (nicht erfindungsgemäß)

Ein Compound bestehend aus einem Matrixpolymer und einer dispergierten Polymerphase wird gemäß der Stand der Technik Rezeptur (Standard) aus Gründen der Kosteneffizienz, aber auch zur Erlangung vorgegebener Festigkeitswerte mit anorganischen Füllstoffen wie Kreide und Talkum befrachtet. Beispielhaft für den hier benannten Standard ist vorliegend ein Anteil von 6%, 12% oder 18% anorganischer Füllstoff bezogen auf das Gesamtgewicht der Rezeptur eingesetzt worden.

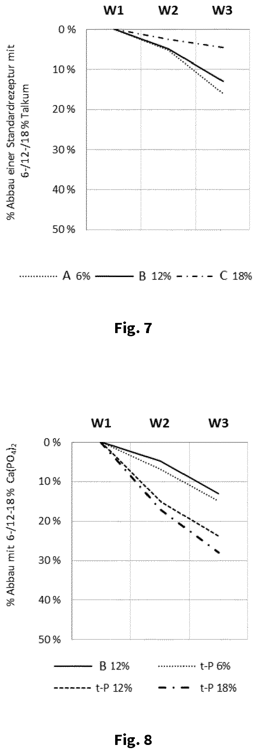

Beim Austausch von Kreide oder Talkum durch tertiäres Calciumphosphat zeigte sich nun überraschend, dass die Abbau rate des Compounds gegenüber dem o.g. Standard schon nach einer Verweilzeit von zwei Wochen um ein Mehrfaches zunahm. Beispielhaft baute eine erfindungsgemäße Folie mit 6% tertiärem Calciumphosphat im Vergleich zu einer entsprechenden Folie mit Talkum (Standard) anstelle von tertiärem Calciumphosphat um das 1,4-fache, eine erfindungsgemäße Folie mit 12% tertiärem Calciumphosphat im Vergleich zum Standard (12% Talkum) um das 3,2-fache und eine Folie mit 18% tertiärem Calciumphosphat im Vergleich zum Standard (18% Talkum) um das 5-fache schneller ab (siehe Fig. 7, Fig. 8). Dabei ist beachtenswert, dass mit Zunahme des anorganischen Füllstoffs Talkum die Abbaurate der Folie tendenziell abnimmt, hingegen mit der Zunahme des anorganischen Füllstoffs tertiärem Calciumphosphat zunimmt, was eine Feinabstimmung der Abbaurate durch entsprechenden Einsatz dieser Füllstoffe ermöglicht.

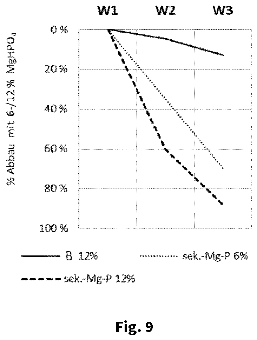

Noch wesentlich gesteigert tritt die Zunahme der Abbaurate auf, wenn das tertiäre Calciumphosphat durch ein sekundäres Magnesiumphosphat ersetzt oder anteilig ersetzt wurde. Die Abbaurate vervielfachte sich in einem hier beschriebenen Beispiel um das 7-fache von 5% auf 35% schon bei einer Halbierung des Anteils des tertiäre Calciumphosphat von 12% auf 6% und Einsatz von 6% sekundären Magnesiumphosphats im Vergleich zu einem entsprechenden Ansatz mit Talkum (12%, Standard; siehe Fig. 9).

Steigert man den Anteil des sekundären Magnesiumphosphats aber auf 12%, dann ergibt sich bereits ein hoher Multiplikator der Abbaurate von fast 18. Gleichsam aus diesem Grund wurde in den vorgenannten Versuchen keine weitere Steigerung des magnesiumhaltigen Fülleranteils mehr getestet. Die Abbaurate ist dann nämlich derart hoch, dass die Bestimmung materialspezifischer Eigenschaften hinsichtlich ihrer Festigkeitswerte kaum noch Sinn macht (nicht gezeigt).

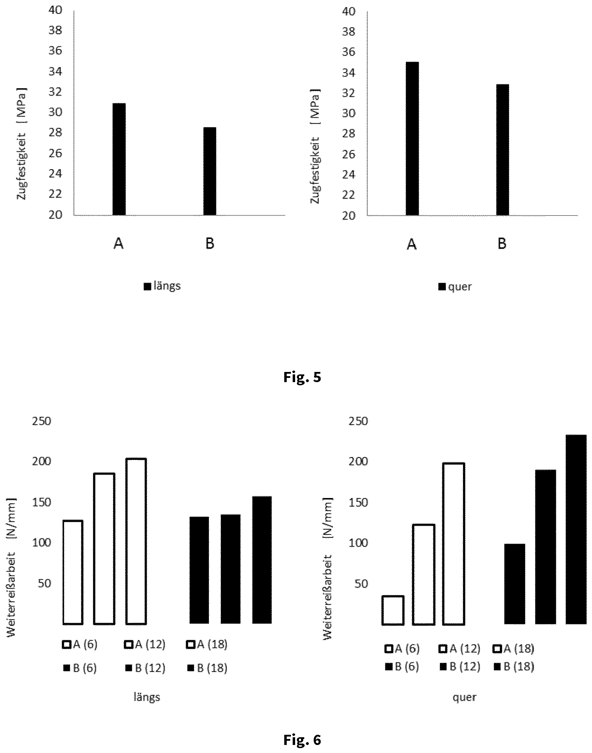

Sieht man von diesem letzten Aspekt ab, ist es unerwartet und vorteilhaft, dass sich die materialspezifischen Eigenschaften der Zugfestigkeit und Bruchdehnung der Rezepturen mit tertiärem phosphathaltigen anorganischen Füllstoffen und sekundären magnesiumhaltigen Phosphaten bis ca. 6% Anteil im Vergleich zu dem Talkum-haltigen Rezepturstandard nur geringfügig unterscheiden (siehe Fig. 4, Fig. 5).

Dies gilt auch für die Weiterreißarbeit (längs), aber nicht für die Weiterreißarbeit (quer) der erfindungsgemäßen Rezepturen im Vergleich zu der Standardrezeptur (siehe Fig. 6). Völlig überraschend hat sich nun zusätzlich herausgestellt, dass sich mit Einbringung von Phosphaten in die Rezeptur eine dramatische Verbesserung der Weiterreißarbeit in Querrichtung erzielen lässt. Diese nimmt naturgemäß mit ansteigendem Füllstoffgehalt ab, liegt jedoch gegenüber dem Talkum-haltigen Standard bei 6%-Anteil um fast 300% höher und übertrifft selbst bei 18% Füllstoffanteil den Talkum-Standard immer noch um enorme 120%.

Dies ist besonders bemerkenswert, weil beispielsweise bei einer Folienanwendung nach dem Anriss die Weiterreißarbeit in Querrichtung das ausschlaggebende Stabilitäts-kriterium darstellt. Die vorliegenden Rezepturen erlauben somit eine vorteilhafte Steuerung des Abbauverhaltens biologisch abbaubarer Compounds durch Variation des Rezepturanteils anorganischer Phosphate bei Erhalt oder sogar leichter Verbesserung der elastizitätsdefinierenden Kenngrößen.

## Patentansprüche

1. Thermoplastische Zusammensetzung, insbesondere für den Einsatz in der Extrusion und Compoundierung, umfassend:
(a) eine kontinuierliche Phase, die wenigstens ein erstes Polymer aufweist, welches aus einer Gruppe ausgewählt wird, welche einen Polyester, ein Polyesteramid, ein Polyesteretheramid, ein aliphatisches oderteilaromatisches Polyesterurethan oder Abmischungen davon, insbesondere solche Verbindungen oder Abmischungen mit hydrophoben Oberflächeneigenschaften aufweist,
(b) wenigstens eine dispergierte Phase, die
(i) als zweites Polymer wenigstens einen biogenen Vernetzer umfasst, welcher einen Wasseranteil von 0,1 bis 30 Gew. %, insbesondere von 5 bis 25 Gew. % in Bezug auf dessen Gesamtgewicht aufweist und worin das erste Polymer der kontinuierlichen Phase nicht mit dem zweiten Polymer der dispergierten Phase mischbar ist, und
(ii) wenigstens einen anorganischen Füllstoff, mit einen Anteil von 0,1 bis 40 Gew. % in Bezug auf das Gesamtgewicht der Zusammensetzung, und
(iii) wenigstens einen Weichmacher aufweist, wobei der Weichmacher Diglycerin oder Abmischungen mit Diglycerin aufweist
**dadurch gekennzeichnet, dass**
der Weichmacher Diglycerin ein Enantiomerenverhältnis von
(a) α,α'- Diglycerin von 50 bis 70 Gew. %, und
(b) α,β - Diglycerin von 25 bis 40 Gew. %,und
(c) β,β'- Diglycerin von 2 bis 10 Gew. %
in Bezug auf die Summe des α,α'-, α,β -, und β,β'- Diglycerins aufweist.

2. Thermoplastische Zusammensetzung gemäß Anspruch 1, **dadurch gekennzeichnet, dass** der Weichmacher Diglycerin ein Enantiomerenverhältnis von
(a) α,α'- Diglycerin von etwa 65 Gew. %, und
(b) α,β - Diglycerin von etwa 30 Gew. % und
(c) β,β'- Diglycerin von etwa 5 Gew. %
in Bezug auf die Summe des α,α'-, α,β -, und β,β'- Diglycerins aufweist.

3. Thermoplastische Zusammensetzung gemäß einem der vorstehenden Ansprüche, **dadurch gekennzeichnet, dass**
der Weichmacher eine Abmischung von
(a) Diglycerin und Triglycerin oder
(b) Diglycerin und Glycerin oder
(c) Diglycerin, Triglycerin und Glycerin aufweist,
wobei die Abmischung unter (a), (b) und (c) das Diglycerin in dieser Zusammenstellung wenigstens zwischen 25 und 75 Gew. % in Bezug auf die Summe
(a) des Diglycerins und des Triglycerins, (b) des Diglycerins und des Glycerins oder (c) des Diglycerins, des Glycerins und des Triglycerins umfasst.

4. Thermoplastische Zusammensetzung gemäß einem der vorstehenden Ansprüche,
**dadurch gekennzeichnet, dass**
der anorganische Füllstoff hydrophile Eigenschaften aufweist.

5. Thermoplastische Zusammensetzung gemäß einem der vorstehenden Ansprüche,
**dadurch gekennzeichnet, dass**
der anorganische Füllstoff Mineralstoffe umfasst, ausgewählt aus einer Gruppe bestehend aus Erdalkalimetallen und deren Salzen, Bentonit, Carbonaten, Kieselsäuren, Kieselgel, Salzen von Erdalkalimetallen mit Kieselsäure und Silicaten, insbesondere Kreiden, Dolomite und/oderTalkum.

6. Thermoplastische Zusammensetzung gemäß Anspruch 4, **dadurch gekennzeichnet, dass**
der anorganische Füllstoff Salze eines Erdalkalimetalls umfasst, vorzugsweise Sulfate und/oder Phosphate des Calciums und/oder Magnesiums.

7. Thermoplastische Zusammensetzung gemäß Anspruch 6, **dadurch gekennzeichnet, dass**
die Salze der Erdalkalimetalle Calciumsulfate, vorzugsweise Gips, wie beispielsweise Naturgips, Naturanhydrit, Rauchgasgips oder Abmischungen daraus sind.

8. Thermoplastische Zusammensetzung gemäß Anspruch 6, **dadurch gekennzeichnet, dass**
die Salze der Erdalkalimetalle Calciumphosphate, vorzugsweise Apatit bzw. Salze und Kondensate der ortho - Phosphorsäure sind sowie monobasische, dibasische und tribasische Magnesiumphosphate sowie deren Hydrate.

9. Thermoplastische Zusammensetzung gemäß einem der vorstehenden Ansprüche,
**dadurch gekennzeichnet, dass**
das erste Polymer der kontinuierlichen Phase
(a) biogene oder teilbiogene Komponenten aufweist und/oder ausgewählt ist aus einer Gruppe von Polyhydroxysäuren, Polyhydroxyalkanoaten, Polylactiden und Ligninen sowie deren Derivaten und/oder Copolymeren und insbesondere ausgewählt ist aus einer Gruppe bestehend aus Polybutylen-Adipat-Terephthalat (PBAT), Polybutylensebacinat-Terephthalat (PBST), Polybutylensuccinat (PBS), Polybutylensuccinat-Adipat (PBSA), und/oder
(b) synthetische Komponenten aufweist und ausgewählt ist aus einer Gruppe von aliphatischen und aromatischen Polyestern sowie aliphatisch-aromatischen CoPolyestern, beispielsweise Polybutylen-Adipat-Terephthalat (PBAT).

10. Thermoplastische Zusammensetzung gemäß einem der vorstehenden Ansprüche,
**dadurch gekennzeichnet, dass**
die Zusammensetzung als eine weitere dispergierte Phase wenigstens ein amorphes oder teilkristallines und insbesondere biogenes Polymer umfasst.

11. Thermoplastische Zusammensetzung gemäß Anspruch 10, **dadurch gekennzeichnet, dass** das amorphe oder teilkristalline und insbesondere biogene Polymer ein Polymer oder Copolymer von Polymilchsäure (PLA) oder ein Polymer oder Copolymer von Polyhydroxyalkanoat (PHA) oder einer Abmischung aus wenigstens zwei der vorgenannten ist.

12. Thermoplastische Zusammensetzung gemäß einem der vorstehenden Ansprüche,
**dadurch gekennzeichnet, dass**
der biogene Vernetzer der dispergierten Phase polysaccharidische Strukturelemente umfasst, die aus einer Gruppe stammen, welche Stärken, die jeweils insbesondere eine spezifische Zusammensetzung aus Amylose und Amylopektin beinhalten, wie beispielsweise aus Kartoffel, Mais, Buchweizen, Weizen, Roggen, Hafer, Gerste, Reis, Erbsen und Tapioka, aufweisen.

13. Thermoplastische Zusammensetzung gemäß Anspruch 12, **dadurch gekennzeichnet, dass**
der biogene Vernetzer der dispergierten Phase wenigstens ein zusätzliches polysaccharidisches Strukturelement aufweist, insbesondere ausgewählt aus der Gruppe bestehend aus Cellulose, Hemicellulose und/oder deren Derivaten, insbesondere Acetat-, Ester-und Ether-Derivaten.

14. Thermoplastische Zusammensetzung gemäß Anspruch 10, **dadurch gekennzeichnet, dass**
das Verhältnis der polysaccharidischen Strukturelemente der dispergierten Phase zu dem wenigstens einen ersten Polymer der kontinuierlichen Phase 10 zu 90 Gew. % bis zu 90 zu 10 Gew. %, vorzugsweise in einem Verhältnis von 30 zu 70 Gew. % bis zu 70 zu 30 Gew. % und stärker bevorzugt in einem Verhältnis von 60 zu 40 Gew. % bis zu 40 zu 60 Gew. % ist, in Bezug auf die Summe der polysaccharidischen Strukturelemente der dispergierten Phase zu dem wenigstens einen ersten Polymer der kontinuierlichen Phase.

15. Thermoplastische Zusammensetzung gemäß einem der vorstehenden Ansprüche,
**dadurch gekennzeichnet, dass**
die Zusammensetzung biologisch abbaubar und/oder kompostierbar ist.

16. Verfahren zum Herstellen von Folien, Filmen, Formkörpern, Schaumstoffen, Beschichtungen, Lacken und Dispersionen unter Einsatz der thermoplastischen Zusammensetzung gemäß einem der Ansprüche 1 bis 15.

17. Verfahren gemäß Anspruch 16, **dadurch gekennzeichnet, dass** die Folien, Filme und Formkörper eine Wanddicke von zwischen 5 µm und 1000 µm bzw. eine Wandstärke von zwischen 10 µm und 2000 µm aufweisen.

18. Verwendung einer thermoplastischen Zusammensetzung gemäß einem der Ansprüche 1 bis 15 zur Herstellung von Folien, Filmen, Formkörpern, Schaumstoffen, Beschichtungen, Lacken und Dispersionen gemäß einem der Ansprüche 16 oder 17.

## Claims

1. A thermoplastic composition, in particular for use in extrusion and compounding, comprising:
(a) a continuous phase that has at least one first polymer which is selected from a group containing a polyester, a polyesteramide, a polyester etheramide, an aliphatic or partially aromatic polyester urethane or blends thereof, in particular such compounds or blends which have hydrophobic surface properties,
(b) at least one dispersed phase,
(i) which comprises, as a second polymer, at least one biogenic crosslinking agent having a water content of 0.1 % to 30 % by weight, in particular of 5 % to 25 % by weight with respect to the total weight thereof, and wherein the first polymer of the continuous phase is not miscible with the second polymer of the dispersed phase, and
(ii) which has at least one inorganic filler, in a proportion of 0.1 % to 40 % by weight with respect to the total weight of the composition, and
(iii) which has at least one plasticizer, wherein the plasticizer contains diglycerol or blends with diglycerol,
**characterized in that**
the plasticizer diglycerol has an enantiomeric ratio of:
(1) 50 % to 70 % by weight for α,α'-diglycerol, and
(2) 25 % to 40 % by weight for α,β-diglycerol, and
(3) 2 % to 10 % by weight for β,β'-diglycerol,
with respect to the sum of the α,α'-, α,β-, and β,β'-diglycerol

2. The thermoplastic composition as claimed in claim 1, **characterized in that**
the plasticizer diglycerol has an enantiomeric ratio of
(a) approximately 65 % by weight for α,α'-diglycerol,
(b) approximately 30 % by weight for α,β-diglycerol, and
(c) approximately 5 % by weight for β,β'-diglycerol
with respect to the sum of the α,α'-, α,β-, and β,β'-diglycerol.

3. The thermoplastic composition as claimed in one of the preceding claims, **characterized in that**
the plasticizer has a blend of
(a) diglycerol and triglycerol, or
(b) diglycerol and glycerol, or
(c) diglycerol, triglycerol and glycerol,
wherein the blend under (a), (b), and (c) in this composition comprises at least between 25 % and 75 % by weight of diglycerol with respect to the sum of (a) the diglycerol and the triglycerol, (b) the diglycerol and the glycerol, or (c) the diglycerol, glycerol, and triglycerol.

4. The thermoplastic composition as claimed in one of the preceding claims, **characterized in that**
the inorganic filler has hydrophilic properties.

5. The thermoplastic composition as claimed in one of the preceding claims, **characterized in that**
the inorganic filler comprises mineral substances selected from a group consisting of alkaline earth metals and their salts, bentonite, carbonates, silicic acids, silica gel, salts of alkaline earth metals with silicic acid and silicates, in particular chalks, dolomites and/or talc.

6. The thermoplastic composition as claimed in claim 4, **characterized in that**
the inorganic filler comprises alkaline earth metal salts, preferably calcium and/or magnesium sulphates and/or phosphates.

7. The thermoplastic composition as claimed in claim 6, **characterized in that**
the alkaline earth metal salts are calcium sulphates, preferably gypsum, for example natural gypsum, natural anhydrite, flue gas gypsum, or blends thereof.

8. The thermoplastic composition as claimed in claim 6, **characterized in that**
the alkaline earth metal salts are calcium phosphates, preferably apatite or salts and condensates of orthophosphoric acid, as well as monobasic, dibasic and tribasic magnesium phosphates, as well as hydrates thereof.

9. The thermoplastic composition as claimed in one of the preceding claims, **characterized in that**
the first polymer of the continuous phase
(a) has biogenic or partially biogenic components and/or is selected from a group formed by polyhydroxy acids, polyhydroxy alkanoates, polylactides and lignins, as well as their derivatives and/or copolymers, and in particular is selected from a group consisting of polybutylene adipate terephthalate (PBAT), polybutylene sebacate terephthalate (PBST), polybutylene succinate (PBS), polybutylene succinate adipate (PBSA), and/or
(b) has synthetic components and is selected from a group formed by aliphatic and aromatic polyesters as well as aliphatic-aromatic copolyesters, for example polybutylene adipate terephthalate (PBAT).

10. The thermoplastic composition as claimed in one of the preceding claims, **characterized in that**
the composition comprises at least one amorphous or semicrystalline polymer, and in particular a biogenic polymer, as a further dispersed phase.

11. The thermoplastic composition as claimed in claim 10, **characterized in that**
the amorphous or semicrystalline and in particular biogenic polymer is a polymer or copolymer of polylactic acid (PLA), or a polymer or copolymer of polyhydroxyalkanoate (PHA), or a blend of at least two thereof.

12. The thermoplastic composition as claimed in one of the preceding claims, **characterized in that**
the biogenic crosslinking agent of the dispersed phase comprises polysaccharidic structural elements which originate from a group which includes starches, each of which in particular contain a specific composition of amylose and amylopectin such as, for example, potatoes, corn, buckwheat, wheat, rye, oats, barley, rice, peas, and tapioca.

13. The thermoplastic composition as claimed in claim 12, **characterized in that**
the biogenic crosslinking agent of the dispersed phase comprises at least one additional polysaccharidic structural element, in particular selected from the group consisting of cellulose, hemicellulose and/or their derivatives, in particular acetate, ester, and ether derivatives.

14. The thermoplastic composition as claimed in claim 10, **characterized in that**
the ratio of the polysaccharidic structural elements of the dispersed phase to the at least one first polymer of the continuous phase is 10 % to 90 % by weight to 90 % to 10 % by weight, preferably in a ratio of 30 % to 70 % to 70 % to 30 % and more preferably in a ratio of 60 % to 40 % to 40 % to 60 %, with respect to the sum of the polysaccharidic structural elements of the dispersed phase and the at least one first polymer of the continuous phase.

15. The thermoplastic composition as claimed in one of the preceding claims, **characterized in that**
the composition is biodegradable and/or compostable.

16. A method for the production of foils, films, shaped articles, foam materials, coatings, paints and dispersions using the thermoplastic composition as claimed in one of claims 1 to 15.

17. The method as claimed in claim 16, **characterized in that**
the foils, films and shaped articles have a wall thickness of between 5 µm and 1000 µm or a wall thickness of between 10 µm and 2000 µm.

18. Use of a thermoplastic composition as claimed in one of claims 1 to 15, for the production of films, shaped articles, foam materials, coatings, paints and dispersions as claimed in claim 16 or claim 17.

## Revendications

1. Composition thermoplastique, notamment pour l'emploi dans l'extrusion et dans le compoundage, comportant :
(a) une phase continue, qui présente au moins un premier polymère, qui est sélectionné à partir d'un groupe qui présente un polyester, un polyesteramide, un polyesterétheramide, un polyesteruréthane aliphatique ou partiellement aromatique ou des mélanges de ceux-ci, notamment de tels combinaisons ou mélanges avec des propriétés de surface hydrophobes,
(b) au moins une phase dispersée, qui
(i) comporte en tant que second polymère au moins un réticulant biogène, qui présente une teneur en eau de 0,1 à 30 % en poids, notamment de 5 à 25 % en poids par rapport à son poids total et dans laquelle le premier polymère de la phase continue n'est pas miscible avec le second polymère de la phase dispersée, et
(ii) au moins une matière de charge anorganique, avec une teneur de 0,1 à 40 % en poids par rapport au poids total de la composition, et
(iii) présente au moins un plastifiant, sachant que le plastifiant présente de la diglycérine ou des mélanges avec de la diglycérine,
**caractérisée en ce que**
le plastifiant diglycérine présente un rapport énantiomérique de
(a) diglycérine α,α' de 50 à 70 % en poids, et
(b) diglycérine α,β de 25 à 40 % en poids, et
(c) diglycérine β,β' de 2 à 10 % en poids
par rapport au total de la diglycérine α,α', α,β, et β,β'.

2. Composition thermoplastique selon la revendication 1, **caractérisée en ce que** le plastifiant diglycérine présente un rapport énantiomérique de

6. Composition thermoplastique selon la revendication 4, **caractérisée en ce que** la matière de charge anorganique comporte des sels d'un métal alcalino-terreux, de préférence des sulfates et/ou des phosphates du calcium et/ou du magnésium.

7. Composition thermoplastique selon la revendication 6, **caractérisée en ce que** les sels des métaux alcalino-terreux sont des sulfates de calcium, de préférence du plâtre, comme par exemple le gypse naturel, l'anhydrite naturelle, le gypse de gaz de fumée ou des mélanges de ceux-ci.

8. Composition thermoplastique selon la revendication 6, **caractérisée en ce que** les sels des métaux alcalino-terreux sont des phosphates de calcium, de préférence de l'apatite et/ou des sels et des condensats de l'acide orthophosphorique ainsi que des phosphates de magnésium monobasiques, dibasiques et tribasiques ainsi que leurs hydrates.

9. Composition thermoplastique selon une quelconque des revendications précédentes, **caractérisée en ce que**
le premier polymère de la phase continue
(a) présente des composants biogènes ou partiellement biogènes et/ou est sélectionné dans un groupe de poly-hydroxy-acides, de polyhydroxyalcanoates, de polylactides et de lignines ainsi que leurs dérivés et/ou copolymères et est notamment sélectionné dans un groupe se composant du polybutylène-adipate-téréphthalate (PBAT), du polybutylènesébacinate-téréphthalate (PBST), du polybutylènesuccinate (PBS), du polybutylènesuccinate-adipate (PBSA), et/ou
(b) présente des composants synthétiques et est sélectionné dans un groupe de polyesters aliphatiques et aromatiques ainsi que de co-polyesters aliphatiques-aromatiques, par exemple du polybutylène-adipate-téréphthalate (PBAT). 60 % en poids, par rapport au total des éléments structurels polysaccharidiques de la phase dispersée relatifs à au moins l'un des premiers polymères de la phase continue.

15. Composition thermoplastique selon une quelconque des revendications précédentes, **caractérisée en ce que**
la composition est biodégradable et/ou compostable.

16. Procédé en vue de la fabrication de feuilles, de films, de corps moulés, de mousses synthétiques, de revêtements, de peintures et de dispersions en employant la composition thermoplastique selon une quelconque des revendications 1 à 15.

17. Procédé selon la revendication 16, **caractérisé en ce que**
les feuilles, films et corps moulés présentent une épaisseur de paroi entre 5 µm et 1000 µm et/ou une épaisseur de paroi entre 10 µm et 2000 µm.

18. Utilisation d'une composition thermoplastique selon une quelconque des revendications 1 à 15 en vue de la fabrication de feuilles, de films, de corps moulés, de mousses synthétiques, de revêtements, de peintures et de dispersions selon une quelconque des revendications 16 ou 17.
